# EUROPÄISCHE PATENTSCHRIFT

(11) **EP 1 851 407 B1**
(45) Veröffentlichungstag und Bekanntmachung des Hinweises auf die Patenterteilung: **09.07.2008**
(21) Anmeldenummer: 06706417.0
(22) Anmeldetag: 26.01.2006
(51) Int. Cl.: E05F 11/38, F16B 19/10, F16B 13/12, F16B 5/02

(54) **VORRICHTUNG ZUM BEFESTIGEN IN EINER IN EINEM TRÄGERTEIL AUSGEBILDETEN TRÄGERTEILAUSNEHMUNG**
DEVICE THAT CAN BE FIXED IN A RECESS CONFIGURED IN A SUPPORT PART
DISPOSITIF DE FIXATION DANS UN EVIDEMENT FORME DANS UN ELEMENT SUPPORT

(30) Priorität: 14.02.2005 DE 102005006750
(43) Veröffentlichungstag der Anmeldung: 07.11.2007
(73) Patentinhaber: A. RAYMOND ET CIE, 38000 Grenoble (FR)
(72) Erfinder: LEGAT, Jean-Jacques, F-38690 Grenoble (FR); BLANC, Jérôme, F-38950 Saint Martin le Vinoux (FR)
(74) Vertreter: Rüttgers, Joachim
(86) Internationale Anmeldenummer: PCT/EP2006/000662
(87) Internationale Veröffentlichungsnummer: WO 2006/084579

(56) Entgegenhaltungen:
- DE-A1- 4 208 125
- GB-A- 1 245 868

## Beschreibung

Die Erfindung betrifft eine Vorrichtung gemäß dem Oberbegriff des Patentanspruches 1.

Eine derartige Vorrichtung ist aus DE 42 08 125 A1 bekannt. Bei dieser Vorrichtung ist ein Außenteil aus einem weichen Material hergestellt und als Beschichtung eines umfänglich geschlossenen Innenteils aus einem hartelastischen Material ausgebildet, wobei eine Halteanordnung zum Verbinden des Außenteiles und des Innenteiles als umlaufende, radial nach außen vorstehende Austragung des Innenteiles geformt ist. Das Einfügeteil ist durch eine Schraube ausgeführt, die bei Einschrauben in das Innenteil die Anordnung aus Außenteil und Innenteil unter Verquetschen des Außenteiles an dem Rand der Trägerteilausnehmung aufweitet, wobei das Innenteil eine durchgehende Ausnehmung für die Schraube aufweist und das Außenteil das Innenteil lediglich auf seiner dem Rand der Trägerteilausnehmung zugewandten Außenseite umgibt, nicht jedoch axial verschließt.

GB 1 245 868 A offenbart eine Vorrichtung zum Befestigen in einer an einem Trägerteil ausgebildeten Trägerteilausnehmung mit einem eine Anzahl von mit einem Zwischenraum voneinander beabstandeten Spreizlamellen aufweisenden Innenteil aus einem hartelastischen Material, das in ein umfänglich geschlossenes, aus einem weichen Material hergestellten Außenteil einfügbar ist. Das Einfügeteil ist entweder als Schraube oder als in Längsrichtung zu verschiebender glattwandiger, zylinderförmiger Stift ausgeführt, um das Aufweiten des Außenteiles und des Innenteiles zu bewirken.

Aus DE 42 08 125 A1 ist eine Vorrichtung bekannt, die über ein in eine Trägerteilausnehmung einfügbares Außenteil aus einem weichen Material und über ein mit einer Halteanordnung mit dem Außenteil innenseitig in Eingriff bringbaren Innenteil aus einem hartelastischen Material verfügt. Das Außenteil ist als das Innenteil im Kontaktbereich zu der Trägerteilausnehmung umgebende Elastomerbeschichtung ausgebildet. Weiterhin ist die vorbekannte Vorrichtung mit einem von einer Einführseite in das Innenteil einführbaren, als Schraube ausgebildeten Einfügeteil ausgestattet, das gegenüber dem Innenteil steifer ausgestaltet ist und bei Einführen das Außenteil und das Innenteil aufweitet, so dass die Vorrichtung unter quetschendem, gestaltändernden Verformen des Außenteiles weitgehend spannungsfrei mit einem spannungsempfindlichen Trägerteil verbindbar ist.

Der Erfindung liegt die Aufgabe zugrunde, eine Vorrichtung der eingangs genannten Art anzugeben, mit der eine in einem Trägerteil ausgebildete Trägerteilausnehmung bei einem sicheren Halt sowie bei einem einfachen Aufbau und Zusammenbau der Vorrichtung mit hoher Dichtwirkung auch bei verhältnismäßig extremen äußeren Bedingungen abdichtbar ist.

Diese Aufgabe wird bei einer Vorrichtung der eingangs genannten Art er.findungsgemäß mit den kennzeichnenden Merkmalen des Patentanspruches 1 gelöst.

Dadurch, dass bei der erfindungsgemäßen Vorrichtung ein topfartig geschlossenes Außenteil und ein Innenteil mit in zwischen Vorsprüngen ausgebildeten Vertiefungen des Außenteiles eingreifenden Stiftstücken vorhanden ist, wobei an den Vorsprüngen im Bereich des Bodenabschnittes und an den freien Enden der Stiftstücke mit einer Eingriffsstruktur zusammenwirkende Rücksprungausnehmungen vorhanden sind, verkrallt sich die erfindungsgemäße Vorrichtung nach Einführen des Innenteiles in das Außenteil mit dem Rand der Trägerteilausnehmung. Gleichzeitig ist das Innenteil in dem Außenteil gesichert, ohne dass es aufwendiger Montagehandgriffe bedarf.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer Seitenansicht ein Ausführungsbeispiel einer erfindungsgemäßen Vorrichtung mit einem Außenteil, einem Innenteil und einem Einfügeteil,
- Fig. 2: in einer perspektivischen Ansicht das Außenteil bei dem Ausführungsbeispiel gemäß Fig. 1,
- Fig. 3: in einer perspektivischen Ansicht das Innenteil bei dem Ausführungsbeispiel gemäß Fig. 1,
- Fig. 4: in einem Querschnitt das Ausführungsbeispiel gemäß Fig. 1 mit dem in eine Trägerteilausnehmung eines Trägerteiles eingeführten Außenteil gemäß Fig. 2, dem in das Außenteil eingefügten Innenteil gemäß Fig. 3 sowie dem an einer Einführseite angesetzten Einfügeteil in einer Anfangsstellung,
- Fig. 5: die Anordnung gemäß Fig. 4 mit dem Einfügeteil beim Einfügen in das Innenteil in einer Zwischenstellung und
- Fig. 6: die Anordnung gemäß Fig. 4 mit dem Einfügeteil nach dem Einfügen in das Innenteil in einer Endstellung.

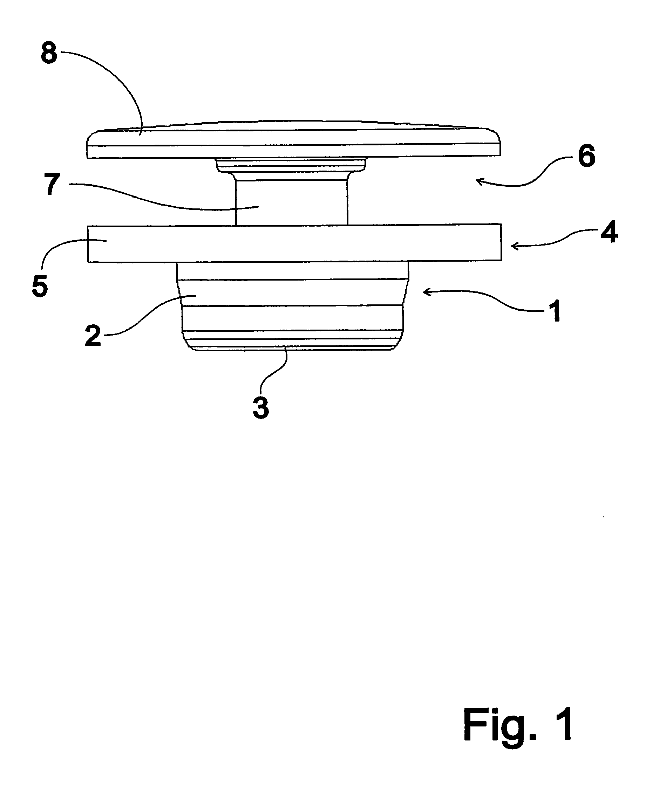

Fig. 1 zeigt in einer Seitenansicht ein Ausführungsbeispiel einer erfindungsgemäßen Vorrichtung mit einem topfartig ausgebildeten Außenteil 1 aus einem weichen Material, das elastisch und/oder elastisch verformbar ist. Das Außenteil 1 verfügt bei dem dargestellten Ausführungsbeispiel über einen im wesentlichen zylinderförmigen seitlichen Wandabschnitt 2 und über einen bodenseitigen Bodenabschnitt 3, der umfänglich mit dem Wandabschnitt 2 verbunden ist.

Das Ausführungsbeispiel gemäß Fig. 1 ist weiterhin mit einem hartelastischen Innenteil 4 ausgestattet, das in der Anordnung gemäß Fig. 1 in das Außenteil 1 eingefügt ist und von dem in dieser Anordnung eine seitlich über den Wandabschnitt 2 des Außenteiles 1 überstehende, beispielsweise kreisförmige Randscheibe 5 zu erkennen ist.

Die erfindungsgemäße Vorrichtung verfügt weiterhin über ein gegenüber dem Innenteil 4 steifer ausgebildetes Einfügeteil 6, das bei dem dargestellten Ausführungsbeispiel einen im wesentlichen zylinderförmigen Schaft 7 und einen an einem Ende des Schaftes 7 angeformten, flachen Deckteller 8 mit vorzugsweise den gleichen Außenabmessungen wie die Randscheibe 5 aufweist.

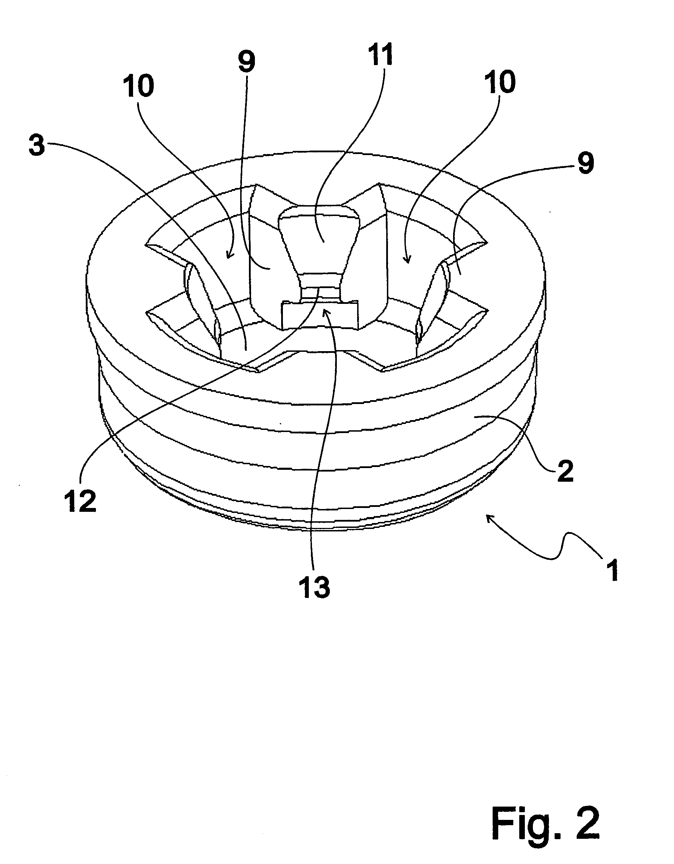

Fig. 2 zeigt in einer perspektivischen Ansicht das Außenteil 1 der erfindungsgemäßen Vorrichtung gemäß Fig. 1. Aus Fig. 2 ist ersichtlich, dass der Wandabschnitt 2 mit einer Anzahl von regelmäßig beabstandeten, radial nach innen weisenden Vorsprüngen 9 und zwischen den Vorsprüngen 9 angeordneten Stiftaufnahmevertiefungen 10 ausgebildet ist. Die Vorsprünge 9 verfügen an ihrer dem Bodenabschnitt 3 abgewandten Seite jeweils über eine radial nach außen angeschrägte Stirnfläche 11, einen in axialer Richtung innenseitig gelegenen Scheitelbereich 12 sowie eine zwischen dem Scheitelbereich 12 und dem Bodenabschnitt 3 ausgebildete, sich in radialer Richtung von dem Scheitelbereich 12 weg nach außen erstreckende Rücksprungausnehmung 13.

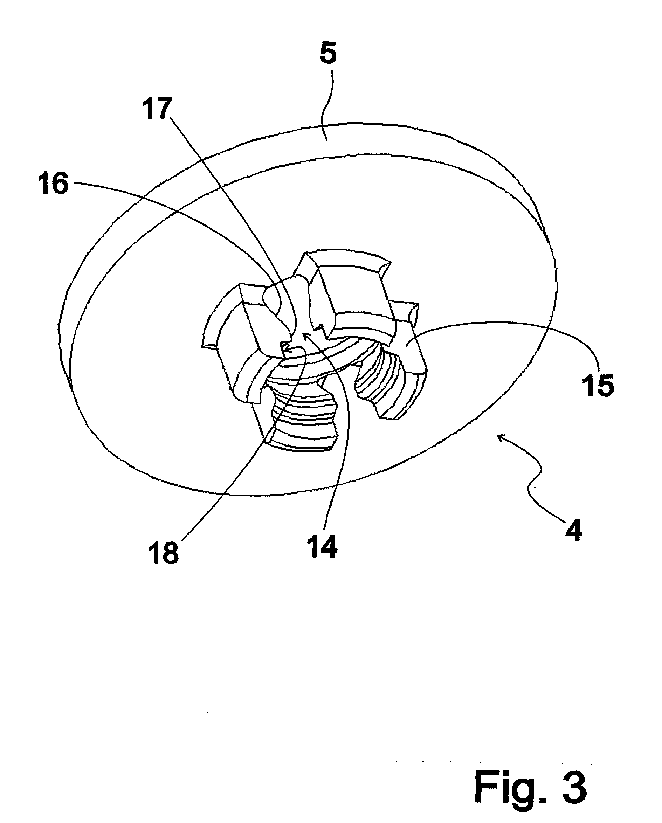

Fig. 3 zeigt in einer perspektivischen Ansicht das Innenteil 4 des Ausführungsbeispieles gemäß Fig. 1. Aus Fig. 3 ist ersichtlich, dass die Randscheibe 5 mit einer mittigen Schaftausnehmung 14 ausgebildet ist, deren Außenabmessungen an den Schaft 7 des Einfügeteiles 6 angepasst sind. An dem an die Schaftausnehmung 14 angrenzenden Innenrand der Randscheibe 5 sind eine Anzahl von Stiftstücken 15 einer Halteanordnung vorhanden, wobei die Anzahl der Stiftstücke 15 sowie deren relative Lage der Anzahl sowie der Lage der Stiftaufnahmevertiefungen 10 entspricht. Die Stiftstücke 15 sind entsprechend den Vorsprüngen 9 mit angeschrägten Stirnflächen 16, Scheitelbereichen 17 und Rücksprungausnehmungen 18 ausgebildet, so dass nach Einfügen des Innenteiles 4 in das Außenteil 1 eine in Umfangsrichtung umlaufende, aus den Scheitelbereichen 12, 17 gebildete Ringwulst und eine aus den Rücksprungausnehmungen 13, 18 zusammengesetzte Ringnut vorhanden sind. Dabei ist der kleinste Innendurchmesser der Ringwulst kleiner als der Außendurchmesser des Schaftes 7 des Einfügeteiles 6.

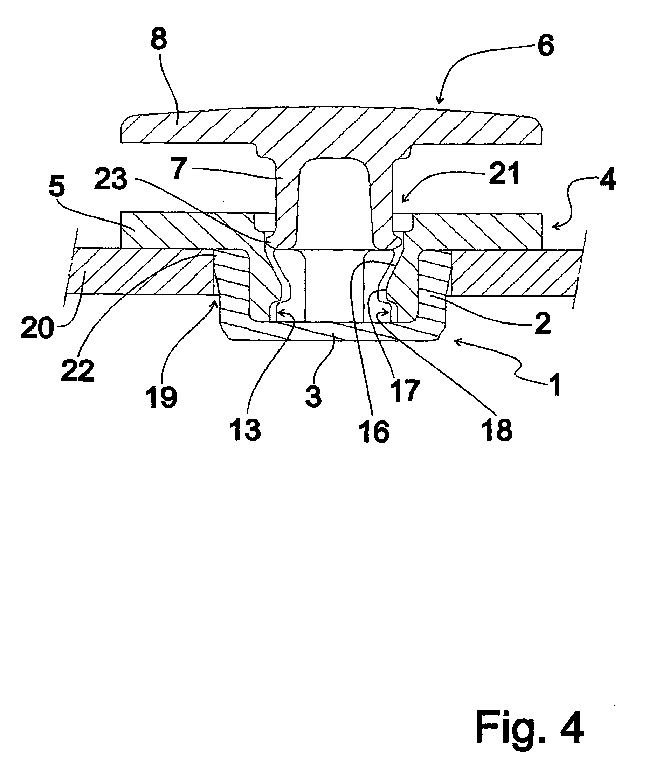

Fig. 4 zeigt in einem Querschnitt das Ausführungsbeispiel gemäß Fig. 1 mit dem in eine Trägerteilausnehmung 19 eines Trägerteiles 20 eingeführten Außenteil 1 gemäß Fig. 2 sowie dem in das Außenteil 1 eingefügten Innenteil 4 gemäß Fig. 3 sowie dem an einer Einführseite 21 angesetzten Einfügeteil 6 in einer Anfangsstellung. Aus Fig. 4 ist ersichtlich, dass ein an der Außenseite des Wandabschnittes 2 des Innenteiles 1 ausgebildeter Ringbund 22 umfänglich an der Innenseite der Trägerteilausnehmung 19 anliegt. Weiterhin lässt sich Fig. 4 entnehmen, dass bei bestimmungsgemäßer Anordnung der erfindungsgemäßen Vorrichtung die Randscheibe 5 mit ihrer dem Außenteil 1 zugewandten Flachseite auf dem Trägerteil 20 aufliegt. Schließlich ist in Fig. 4 dargestellt, dass der Schaft 7 hohlzylindrisch ausgebildet ist und dass an seinem von dem Deckteller 8 abgewandten Ende ein umlaufender, radial nach außen vorstehender Rastring 23 angeformt ist.

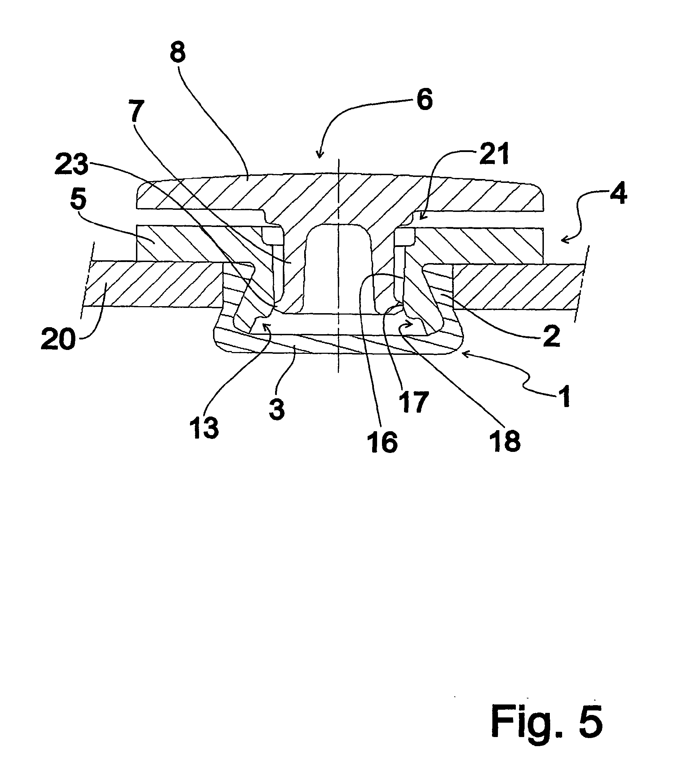

Fig. 5 zeigt die Anordnung gemäß Fig. 4 mit dem Einfügeteil 6 beim Einfügen in das Innenteil 4 in einer Zwischenstellung. Fig. 5 lässt sich entnehmen, dass der Rastring 23 bei Überfahren der Stirnflächen 11, 16 sowie der Scheitelbereiche 12, 17 der Vorsprünge 9 beziehungsweise der Stiftstücke 15 die Vorsprünge 9 des Außenteiles 1 und die Stiftstücke 15 des Innenteiles 4 nach außen biegt. Dadurch ist das Außenteil 1 unter Andrücken des Wandabschnittes 2 gegen den Innenrand der Trägerteilausnehmung 19 radial nach außen aufgeweitet sowie verklemmt.

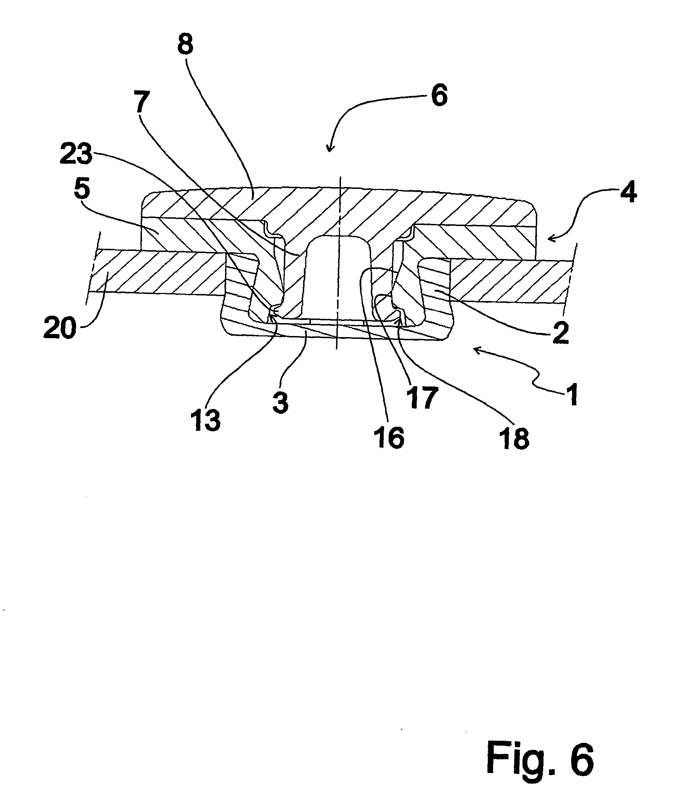

Fig. 6 zeigt die Anordnung gemäß Fig. 4 mit dem Einfügeteil 6 nach dem Einfügen in das Innenteil 4 in einer Endstellung, in der der Deckteller 8 des Einfügeteiles 6 auf der Randscheibe 5 des Innenteiles 4 aufliegt. In dieser Endstellung sind bei Anordnung des Rastringes 23 in der durch die Rücksprungausnehmungen 13, 18 gebildeten Ringnut 24 die Stiftstücke 15 des Innenteiles 4 gegenüber ihrer in Fig. 3 und Fig. 4 dargestellten Ruhestellung unter Vorspannung geringfügig nach außen aufgebogen, während der Wandabschnitt 2 des Außenteiles 1 gegenüber der in Fig. 1, Fig. 2 und Fig. 4 dargestellten Lage in seinem über das Trägerteil 20 hinaus überstehenden Bereich nach außen aufweitet verbleibt und in seinem innerhalb der Trägerteilausnehmung 19 angeordneten Bereich gegen den Innenrand der Trägerteilausnehmung 19 angedrückt ist. Dadurch ist eine kraft- und formschlüssige Verankerung des Außenteiles 1 und damit der erfindungsgemäßen Vorrichtung insgesamt erzielt.

Auf diese Weise ist die Trägerteilausnehmung 19 bei bestimmungsgemäßer Anordnung des Außenteiles 1, das Innenteiles 4 und des Einfügeteiles 6 der erfindungsgemäßen Vorrichtung auch bei auftretenden hohen Drücken bis zu etwa 100 bar und hohen Temperaturen bis zu etwa 80 Grad Celsius zuverlässig abgedichtet, indem neben einem ersten Schutz durch die Randscheibe 5 des Innenteiles 4 sowie dem Deckteller 8 des Einfügeteiles 6 das Innenteil 4 sowie Einfügeteil 6 in dem von der Einführseite 21 abgewandten Bereich von dem Außenteil 1 vollständig umschlossen sind.

## Patentansprüche

1. Vorrichtung zum Befestigen in einer in einem Trägerteil (20) ausgebildeten Trägerteilausnehmung (19) mit einem in die Trägerteilausnehmung (19) einfügbaren Außenteil (1) aus einem weichen Material, mit einem mit einer Halteanordnung (15) mit dem Außenteil (1) innenseitig in Eingriff bringbaren Innenteil (4) aus einem hartelastischen Material und mit einem von einer Einführseite (21) in das Innenteil (4) einführbaren Einfügeteil (6), das gegenüber dem Innenteil (4) steifer ausgestaltet ist und bei Einführen das Außenteil (1) sowie das Innenteil (4) aufweitet, **dadurch gekennzeichnet, dass** das Außenteil (1) topfartig mit einem umfänglich geschlossenen äußeren Wandabschnitt (2) und mit einem das Außenteil (1) an einer der Einführseite (21) gegenüberliegenden Rückseite verschließenden, umfänglich mit dem Wandabschnitt (2) verbundenen Bodenabschnitt (3) ausgebildet ist, dass das Außenteil (1) eine Anordnung von sich nach innen erstreckenden Vorsprüngen (9) aufweist, zwischen denen Vertiefungen (10) ausgebildet sind, dass das Innenteil (4) mit einer umfänglich über das Außenteil (1) überstehenden Randscheibe (5) und mit im Bereich einer in die Randscheibe (5) eingebrachten Schaftausnehmung (14) angesetzten, sich von der Randscheibe (5) weg erstreckenden Stiftstücken (15) ausgebildet ist, dass an den Vorsprüngen (9) im Bereich des Bodenabschnittes (3) und an den freien Enden der Stiftstücke (15) jeweils eine sich in Richtung des Wandabschnittes (2) erstreckende Rücksprungausnehmung (13, 18) ausgebildet ist und dass das Einfügeteil (6) einen Schaft (7) aufweist, an dessen freien Ende eine in die Rücksprungausnehmungen (13, 18) einfügbare Eingriffsstruktur (23) vorhanden ist.

2. Vorrichtung nach Anspruch 1, **dadurch gekennzeichnet, dass** die Rücksprungausnehmungen (13, 18) in zusammengefügter Anordnung des Außenteiles (1) und des Innenteiles (4) eine umlaufende Ringnut (24) ausbilden.

3. Vorrichtung nach Anspruch 2, **dadurch gekennzeichnet, dass** die Eingriffsstruktur ein Rastring (21) ist.

4. Vorrichtung nach einem der Ansprüche 1 bis 3, **dadurch gekennzeichnet, dass** das Außenteil (1) an der Einführseite (21) einen radial über den Wandabschnitt (2) vorstehenden Ringbund (22) aufweist.

## Claims

1. Device for fixing in a recess (19) formed in a support part (20), comprising an outer part (1) insertable into the recess (19) of the support part and made of a soft material, comprising an inner part (4) which can be made to engage the inside of the outer part (1) by means of a retaining arrangement (15) and is made of a hard resilient material, and comprising an inserted part (6) which can be introduced from an insertion side (21) into the inner part (4) and is stiffer compared with the inner part (4) and, on introduction, expands the outer part (1) and the inner part (4), **characterized in that** the outer part (1) is formed in the manner of a pot having a circumferentially closed outer wall section (2) and having a bottom section (3) closing the outer part (1) on a back opposite the insertion side (21) and connected circumferentially to the wall section (2), **in that** the outer part (1) has an arrangement of projections which extend inwards and between which depressions (10) are formed, **in that** the inner part (4) is formed with an edge disc (5) projecting circumferentially beyond the outer part (1) and with pin pieces (15) which are mounted in the region of a shaft recess (14) introduced into the edge disc (5) and which extend away from the edge disc (5), **in that** a flyback recess (13, 18) extending in the direction of the wall section (2) is formed in each case on the projections (9) in the region of the bottom section (3) and at the free ends of the pin pieces (15), and **in that** the inserted part (6) has a shaft (7) on the free end of which an engaging structure (23) insertable into the flyback recesses (13, 18) is present.

2. Device according to Claim 1, **characterized in that,** in the assembled arrangement of the outer part (1) and of the inner part (4) the flyback recesses (13, 18) form an all-round annular groove (24).

3. Device according to Claim 2, **characterized in that** the engaging structure is a locking ring (21).

4. Device according to any of Claims 1 to 3, **characterized in that** the outer part (1) has, on the insertion side (21), an annular collar (22) projecting radially beyond the wall section (2).

## Revendications

1. Dispositif destiné à être fixé dans une ouverture (19) ménagée dans un élément faisant office de support (20), se composant d'un élément extérieur (1), réalisé dans une matière tendre, destiné à être emmanché dans l'ouverture (19) de l'élément faisant office de support, d'un élément intérieur (4), réalisé dans une matière à cédage élastique dur, muni d'un dispositif de retenue (15), destiné à être intérieurement inséré en prise d'engagement réciproque avec l'élément extérieur (1), et d'un élément d'insertion (6) destiné à être emmanché dans l'élément intérieur (4) depuis le côté d'introduction (21), qui fait preuve d'une rigidité plus importante que celle de l'élément intérieur (4) et qui, lors de son emmanchement, force l'élément extérieur (1) ainsi que l'élément intérieur (4) à s'écarter, **caractérisé en ce que** l'élément extérieur (1) a une configuration en forme de pot, se composant d'une portion formant paroi extérieure (2) fermée sur son pourtour périphérique et d'une portion formant fond (3) fermant la face arrière opposée au côté d'introduction (21), raccordée sur son pourtour périphérique à la portion formant paroi (2), **en ce que** l'élément extérieur (1) comporte un agencement constitué par des protubérances (9) qui s'étendent vers l'intérieur, définissant entre elles des cavités (10), **en ce que** l'élément intérieur (4) comprend une rondelle périphérique (5) faisant saillie au-dessus du pourtour de l'élément extérieur (1), et des éléments en forme de broche (15), disposés attenants à la zone correspondant à une ouverture de passage de tige (14) ménagée dans la rondelle périphérique (5), s'étendant vers l'extérieur depuis la rondelle périphérique (5), **en ce qu'**il est respectivement prévu, au niveau des protubérances (9), dans la zone de la portion formant fond (3), et au niveau des extrémités libres des éléments en forme de broche (15), un évidement formant retrait (13, 18) s'étendant dans la direction de la portion formant paroi (2), et **en ce que** l'élément d'insertion (6) comporte une tige (7) qui est munie, au niveau de son extrémité libre, d'une structure de mise en prise d'encastrement (23) destinée à emmanchée dans les évidements formant retrait (13, 18).

2. Dispositif selon la revendication 1, **caractérisé en ce que** les évidements formant retrait (13, 18) définissent, lorsque l'élément extérieur (1) et l'élément intérieur (4) sont assemblés en prise d'encastrement réciproque, une gorge périphérique circulaire (24).

3. Dispositif selon la revendication 2, **caractérisé en ce que** la structure de mise en prise d'encastrement est constituée par un élément annulaire d'accrochage (21).

4. Dispositif selon l'une des revendications 1 à 3, **caractérisé en ce que** l'élément extérieur (1) est muni, sur son côté introduction (21), d'un épaulement annulaire (22) faisant saillie dans le plan radial au-dessus de la portion formant paroi (2).
